# EUROPÄISCHE PATENTSCHRIFT

(11) **EP 1 203 773 B1**
(45) Veröffentlichungstag und Bekanntmachung des Hinweises auf die Patenterteilung: **11.08.2004**
(21) Anmeldenummer: 01125713.6
(22) Anmeldetag: 27.10.2001
(51) Int. Cl.: C07F 9/40

(54) **Verfahren zur Herstellung von Alkenylphosphonsäure-Derivaten**
Process for the preparation of alkenylphosphonic acid derivatives
Procédé pour la préparation de dérivés d'acides alcényl phosphoniques

(30) Priorität: 02.11.2000 DE 10054218
(43) Veröffentlichungstag der Anmeldung: 08.05.2002
(73) Patentinhaber: BASF AKTIENGESELLSCHAFT, 67056 Ludwigshafen (DE)
(72) Erfinder: Henkelmann, Jochem, Dr., 68165 Mannheim (DE); Klass, Katrin, Dr., 68159 Mannheim (DE); Arndt, Jan-Dirk, Dr., 68167 Mannheim (DE)

(56) Entgegenhaltungen:
- WO-A-98/46613
- WO-A-99/67259
- DE-A- 19 933 601
- US-A- 3 673 285
- US-A- 3 681 481
- US-A- 5 693 826

## Beschreibung

Die vorliegende Erfindung betrifft ein Verfahren zur Herstellung von Alkenylphosphonsäure-Derivaten durch Umsetzung von Phosphonsäure-Derivaten mit Alkinen in Gegenwart eines Komplexkatalysator-Systems.

Vinylphosphonsäure-Derivate, insbesondere Vinylphosphonsäuredialkylester sind als Vorprodukte für die Herstellung von Vinylphosphonsäuren sowie als Monomere zur Copolymerisation für die Herstellung von Klebstoffen und flammfesten Kunststoffen von Bedeutung.

Zu ihrer Herstellung sind unterschiedliche Verfahren bekannt. Das in der Offenlegungsschrift DE-OS 21 32 962 beschriebene Verfahren geht von Ethylenoxid und Phosphortrichlorid aus. Das primär erhaltene Umsetzungsprodukt Tris-(2-chlorethyl)-phosphit wird bei 140 bis 200°C zu 2-Chlorethanphosphonsäure-bis(2-chlorethylester) umgelagert und sodann in Gegenwart eines Katalysators mit Phosgen zu 2-Chlorethanphosphonsäuredichlorid und Vinylphosphonsäuredichlorid umgesetzt. Als Katalysatoren kommen Amine, heterocyclische Stickstoffverbindungen und Phosphine sowie Phosphinoxide zum Einsatz.

In EP 0 032 663 A2 ist ein Verfahren zur Herstellung von Vinylphosphonsäure-Derivaten beschrieben, bei dem 2-Acetoxyethanphosphonsäuredialkylester in Gegenwart saurer oder basischer Katalysatoren gespalten werden. Als basische Katalysatoren werden tertiäre Amine und Phosphine, Ammoniumsalze oder Phosphoniumsalze, heterocyclische Verbindungen und Säureamide vorgeschlagen. Nachteil des Verfahrens ist die Bildung eines Gemisches von Vinylphosphonsäure-Derivaten. Der Anteil an Vinylphosphohsäuredialkylestern beträgt maximal 23 %.

Eine verbesserte Variante dieses Verfahrens gemäß DE 31 20 437 A1 beinhaltet die Umsetzung des erhaltenen Produktgemisches mit Carbonsäureorthoestern zu Vinylphosphonsäuredialkylestern.

Nachteile der vorstehenden Verfahren sind die Bildung von Produktgemischen, aufwendige, mehrstufige Syntheseverfahren, der erforderliche Einsatz hoher Umsetzungstemperaturen und der Einsatz chlorierter Ausgangsverbindungen. Insbesondere der große Nebenproduktanteil verschlechtert die Verfahrensökonomie beträchtlich.

Eine weitere Syntheseroute zur Herstellung von Alkenylphosphonsäurediestern ist die Addition von Alkinen an Phosphonsäurediestern in Gegenwart eines Palladium-Komplexkatalysators. Vorteil dieser Syntheseroute ist eine reine Additionsreaktion ohne Bildung stöchiometrischer Mengen an Neben- oder Koppelprodukten. US 5,693,826 und WO 98/46613 offenbaren die Addition in Gegenwart eines Palladium-Komplexkatalysators mit Phosphinen und Phosphiten als Liganden bei Temperaturen kleiner gleich 100°C. In WO 99/67259 und US 6,111,127 werden als Liganden zweizähnige Phosphine genannt. Nachteilig bei diesen Verfahren ist der Einsatz teuerer Edelmetallkatalysatoren.

Das US-Patent 3,673,285 beschreibt die Addition von Alkinen an Phosphonsäurediestern unter Bildung von Alkenylphosphonsäurediestern bei Temperaturen von 130 bis 200°C in Gegenwart von Nickel-Komplexkatalysatoren aus der Reihe Dicarbonyl-bis(triphenylphosphino)-nickel(0), Bis(tris(hydroxymethyl)phosphino)-nickel(II)-chlorid, Bis(tri-n-butylphosphino)-nickel(II)-bromid und Tetracarbonyl-nickel(Ö). Bei der Addition von Ethin an Phosphorigsäurediethylester (Diethylphosphit) wurde in Gegenwart von Bis(trin-butylphosphino)-nickel(II)-bromid eine Ausbeute an Vinylphosphonsäuredieethylester von 40% erreicht (Beispiel 15). Nachteile dieses Verfahrens sind eine geringe Ausbeute von deutlich unter 50 % und die erforderliche hohe Reaktionstemperatur von bis zu 200°C, welche zu einer exothermen Zersetzung der Phosphonsäureethylester führt.

Es bestand daher die Aufgabe, ein Verfahren zur Herstellung von Alkenylphosphonsäure-Derivaten zu finden, welches die oben genannten Nachteile nicht besitzt, keine Koppelprodukte bildet, eine Reaktionstemperatur von deutlich unterhalb 200°C erlaubt, eine hohe Ausbeute von deutlich über 50 % ermöglicht und ohne Einsatz eines teueren Edelmetallkatalysators auskommt.

Demgemäß wurde ein Verfahren zur Herstellung von Alkenylphosphonsäure-Derivaten durch Umsetzung von Phosphonsäure-Derivaten mit Alkinen in Gegenwart eines Komplexkatalysator-Systems gefunden, das dadurch gekennzeichnet ist, daß man ein Komplexkatalysator-Systems verwendet, welches
a) Nickel und
b) ein Phosphin mit mindestens zwei dreibindigen Phosphoratomen
enthält.

Wesentlich beim erfindungsgemäßen Verfahren ist die Gegenwart eines Komplexkatalysator-Systems, welches (a) Nickel und (b) ein Phosphin mit mindestens zwei dreibindigen Phosphoratomen, enthält. Im Allgemeinen Sprachgebrauch werden Phosphine mit zwei dreibindigen Phosphoratomen als Diphosphine, Phosphine mit drei dreibindigen Phosphoratomen als Triphosphine, usw. bezeichnet.

Im Allgemeinen besitzen die beim erfindungsgemäßen Verfahren verwendeten Phosphine die allgemeine Formel (I) 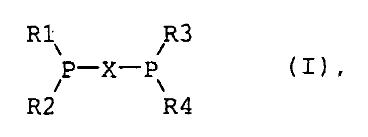 in der R¹, R², R³ und R⁴ jeweils unabhängig voneinander einen Kohlenstoff enthaltenden organischen Rest bedeuten und X für eine Kohlenstoff enthaltende organische Brückengruppe steht.

Unter einem Kohlenstoff enthaltenden organischen Rest ist ein unsubstituierter oder substituierter, aliphatischer, aromatischer oder araliphatischer Rest mit 1 bis 30 Kohlenstoffatomen zu verstehen. Dieser Rest kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, Iod und/oder eine Cyanogruppe (bei dem Rest R handelt es sich hierbei ebenfalls um einen Kohlenstoff enthaltenden organischen Rest). Enthält der Kohlenstoff enthaltende organische Rest ein oder mehrere Heteroatome, so kann dieser auch über ein Heteroatom gebunden sein. Somit sind beispielsweise auch Ether-, Thioether- und tertiäre Aminogruppen eingeschlossen. Bei dem Kohlenstoff enthaltenden organischen Rest kann es sich um einen einwertigen oder auch mehrwertigen, beispielsweise zweiwertigen Rest handeln.

Unter einer Kohlenstoff enthaltenden organischen Brückengruppe ist eine unsubstituierte oder substituierte, aliphatische, aromatische oder araliphatische zweiwertige Gruppe mit 1 bis 20 Kohlenstoffatomen und 1 bis 10 Atomen in der Kette zu verstehen. Die organische Brückengruppe kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, Iod und/oder eine Cyanogruppe (bei dem Rest R handelt es sich hierbei ebenfalls um einen Kohlenstoff enthaltenden organischen Rest). Enthält die organische Brückengruppe ein oder mehrere Heteroatome, so kann diese auch jeweils über ein Heteroatom gebunden sein. Somit sind beispielsweise auch Ether-, Thioether- und tertiäre Aminogruppen eingeschlossen.

Bevorzugt setzt man beim erfindungsgemäßen Verfahren ein Phosphin (I) ein, bei dem die Reste R¹, R², R³ und R⁴ unabhängig voneinander für
- einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO- oder -NR-, ersetzt sein können und bei dem ein oder mehrere der Wasserstoffatome durch Substituenten, wie beispielsweise Arylgruppen ersetzt sein können;
- einen unsubstituierten oder substituierten aromatischen Rest mit einem Ring oder zwei oder drei kondensierten Ringen, bei dem eines oder mehrere Ringatome durch Heteroatome, wie beispielsweise Stickstoff, substituiert sein können und bei dem ein oder mehrere der Wasserstoffatome durch Substituenten, wie beispielsweise Alkyl- oder Arylgruppen ersetzt sein können;
oder bei dem die Reste R¹ zusammen mit R² und/oder R³ zusammen mit R⁴ für
- eine unsubstituierte oder substituierte, aliphatische, aromatische oder araliphatische Gruppe mit 3 bis 10 Atomen in der Kette;
stehen.

Als Beispiele der bevorzugten einwertigen Reste R¹, R², R³ und R⁴ seien Methyl, Ethyl, 1-Propyl, 2-Propyl (sek.-Propyl), 1-Butyl, 2-Butyl (sek.-Butyl), 2-Methyl-1-propyl (iso-Butyl), 2-Methyl-2-propyl (tert.-Butyl), 1-Pentyl, 2-Pentyl, 3-Pentyl, 2-Methyl-2-butyl (tert.-Amyl), 1-Hexyl, 2-Hexyl, 3-Hexyl, 2-Methyl-2-pentyl, 3-Methyl-3-pentyl, 2-Methoxy-2-propyl, Methoxy, Ethoxy, 1-Propoxy, 2-Propoxy (sek.-Propoxy), 1-Butoxy, 2-Butoxy (sek.-Butoxy), 2-Methyl-1-propoxy (iso-Butoxy), 2-Methyl-2-propoxy (tert.-Butoxy), 1-Pentoxy, 2-Pentoxy, 3-Pentoxy, 2-Methyl-2-butoxy (tert.-Amoxy), 1-Hexoxy, 2-Hexoxy, 3-Hexoxy, 2-Methyl-2-pentoxy, 3-Methyl-3-pentoxy, Phenyl, 2-Methylphenyl (o-Tolyl), 3-Methylphenyl (m-Tolyl), 4-Methylphenyl (p-Tolyl), 2;6-Dimethylphenyl, 2,4-Dimethylphenyl, 2,4,6-Trimethylphenyl, 2-Methoxyphenyl, 3-Methoxyphenyl, 4-Methoxyphenyl, 2-Pyridyl, 3-Pyridyl, 4-Pyridyl, 3-Pyridazinyl, 4-Pyridazinyl, 5-Pyridazinyl, 2-Pyrimidinyl, 4-Pyrimidinyl, 5-Pyrimidinyl, 2-Pyrazinyl, 2-(1,3,5-Triazin)yl, 1-Naphthyl, 2-Naphthyl, 2-Chinolyl, 8-Chinolyl, 1-Isochinolyl und 8-Isochinolyl genannt. Als Beispiele der bevorzugten zweiwertigen Reste R¹ zusammen mit R² und/oder R³ zusammen mit R⁴ seien 1,4-Butylen, 1,4-Dimethyl-1,4-butylen, 1,1,4,4-Tetramethyl-1,4-butylen, 1,4-Dimethoxy-1,4-butylen, 1,4-Dimethyl-1,4-dimethoxy-1,4-butylen, 1,5-Pentylen, 1,5-Dimethyl-1,5-pentylen, 1,5-Dimethoxy-1,5-pentylen, 1,1,5,5-Tetramethyl-1,5-pentylen, 1,5-Dimethyl-1,5-dimethoxy-1,5-pentylen, 3-Oxa-1,5-pentylen, 3-Oxa-1,5-dimethyl-1,5-pentylen, 3-Oxa-1,5-dimethoxy-1,5-pentylen, 3-Oxa-1,1,5,5-tetramethyl-1,5-pentylen, 3-Oxa-1,5-dimethyl-1,5-dimethoxy-1,5-pentylen, 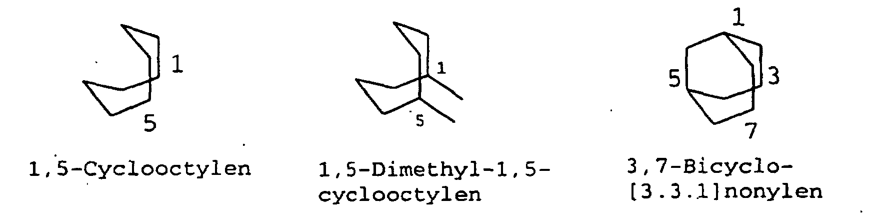 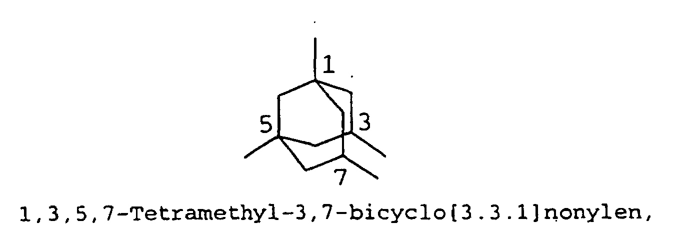 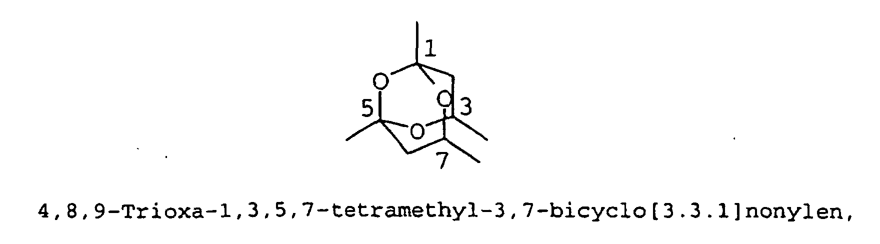 genannt.

Besonders bevorzugt setzt man beim erfindungsgemäßen Verfahren ein Phosphin (I) ein, bei dem R¹, R², R³ und/oder R⁴ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und Iod gebunden ist, bedeuten; und/oder bei dem R¹, R², R³ und/oder R⁴ unabhängig voneinander einen unsubstituierten oder substituierten aromatischen Rest mit 6 Ringatomen, bei dem ein, zwei oder drei Ringatome durch Stickstoff substituiert sein können, bedeuten; und/oder bei dem R¹ zusammen mit R² und/oder R³ zusammen mit R⁴ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

Bei dem unsubstituierten oder substituierten C₃- bis C₁₂-Alkylrest, bei dem an das α-Kohlenstoffatom höchstens ein Atom aus der Reihe Wasserstoff, Fluor, Chlor, Brom und Iod gebunden ist, handelt es sich um einen sogenannten, am α-Kohlenstoffatom verzweigten Alkylrest. Bevorzugt sind an das α-Kohlenstoffatom mindestens zwei weitere Kohlenstoffatome gebunden. Bei dem dritten, an das α-Kohlenstoffatom gebundene Atom handelt es sich bevorzugt um Wasserstoff, Kohlenstoff oder um ein Heteroatom, wie beispielsweise Sauerstoff, Stickstoff oder Schwefel. Als bevorzugte Beispiele seien 2-Propyl (sek.-Propyl), 2-Butyl (sek.-Butyl), 2-Methyl-2-propyl (tert.-Butyl), 2-Methyl-2-butyl (tert.-Amyl) und 2-Methoxy-2-propyl genannt.

Als bevorzugte Beispiele für einen unsubstituierten oder substituierten aromatischen Rest mit 6 Ringatomen, bei dem ein, zwei oder drei Ringatome durch Stickstoff substituiert sein können, seien Phenyl, 2-Methylphenyl (o-Tolyl), 3-Methylphenyl (m-Tolyl), 4-Methylphenyl (p-Tolyl), 2,6-Dimethylphenyl, 2,4-Dimethylphenyl, 2,4,6-Trimethylphenyl und 2-Pyridyl genannt.

Als bevorzugte Beispiele der zweiwertigen Reste R¹ zusammen mit R² und/oder R³ zusammen mit R⁴ seien 1,1,4,4-Tetramethyl-1,4-butylen, 1,4-Dimethyl-1,4-dimethoxy-1,4-butylen, 1,1,5,5-Tetramethyl-1,5-pentylen, 1,5-Dimethyl-1,5-dimethoxy-1,5-pentylen, 1,5-Dimethyl-1,5-cyclooctylen, 1,3,5,7-Tetramethyl-3,7-bicyclo[3.3.1]nonylen und 4,8,9-Trioxa-1,3,5,7-tetramethyl-3,7-bicyclo[3.3.1]nonylen genannt.

Ganz besonders bevorzugt setzt man beim erfindungsgemäßen Verfahren ein Phosphin (I) ein, bei dem die Reste R¹, R², R³ und R⁴ jeweils eine 2-Methyl-2-propyl- (tert.-Butyl-) oder eine Phenyl-Gruppe bedeuten.

Bevorzugt setzt man beim erfindungsgemäßen Verfahren ein Phosphin (I) ein, bei dem X für eine unsubstituierte oder substituierte, aliphatische, aromatische oder araliphatische Gruppe mit 1 bis 8 Atomen, bevorzugt 2 bis 4 Atomen, in der Kette und insgesamt nicht mehr als 20 Kohlenstoffatomen, steht. Bei der genannten Gruppe können eine oder mehrere der CH₂-Gruppen durch Heteroatome, wie etwa -O-, oder durch Heteroatom enthaltende Gruppen, wie etwa -CO- oder -NR-, und/oder eines oder mehrere der aromatischen Ringatome durch Heteroatome, wie etwa Stickstoff, substituiert sein.

Als Beispiele der bevorzugten Brückengruppe X seien 1,2-Ethylen, 1,3-Propylen, 1,2-Propylen, 1,4-Butylen, 2-Methyl-1,3-propylen, 1,5-Pentylen, 2,2-Dimethyl-1,3-propylen, 1,6-Hexylen, -O-CH₂CH₂-O-, -O-CH₂CH₂CH₂-O-, o-Phenylen, o-Xylen oder 2,2'-Biphenylen genannt.

Besonders bevorzugt setzt man beim erfindungsgemäßen Verfahren ein Phosphin (I) ein, bei dem die Brückengruppe X für eine 1,2-Ethylen-, 1,3-Propylen-, 1,4-Butylen- oder o-Xylen-Gruppe steht.

Ganz besonders bevorzugt setzt man beim erfindungsgemäßen Verfahren ein Phosphin (I) ein, bei dem die Reste R¹ bis R⁴ jeweils eine 2-Methyl-2-propyl- (tert.-Butyl-) oder eine Phenyl-Gruppe bedeuten und X für eine 1,2-Ethylen-, 1,3-Propylen-, 1,4-Butylen- oder o-Xylen-Gruppe steht. Als ganz besonders bevorzugte Beispiele seien 1,2-Bis(di-tert.-butyl-phosphino)-ethan, 1,2-Bis(diphenylphosphino)-ethan, 1,3-Bis(di-tert.-butyl-phosphino)-propan, 1,3-Bis(diphenylphosphino)-propan, 1,4-Bis(di-tert.-butyl-phosphino)-butan, 1,4-Bis(diphenylphosphino)-butan, Bis(di-tert.butyl-phosphino)-o-xylol und Bis(diphenylphosphino)-o-xylol, insbesondere 1,3-Bis(di-tert.-butyl-phosphino)-propan und 1,3-Bis(diphenylphosphino)-propan genannt.

Die Synthese von Diphosphinen ist allgemein bekannt und beispielsweise in L. Brandsma et al., "Application of Transition Metal Catalysts in Organic Synthesis", Springer-Verlag, Berlin 1997, Seiten 6 bis 9 beschrieben.

Beim erfindungsgemäßen Verfahren wird das Komplexkatalysator-System im Allgemeinen durch Zusammenfügen eines Ni-Komplexes und dem Phosphin oder durch Zusammenfügen einer Ni(II)-Verbindung, eines Reduktionsmittels und dem Phosphin herstellt. Da auch das Phosphin als Reduktionsmittel wirken kann, ist das Komplexkatalysator-System auch durch Zusammenfügen einer Ni(II)-Verbindung und dem Phosphin ohne weiteres Reduktionsmittel erhältlich.

Als Ni-Komplexe sind bei Durchführung der erstgenannten Variante prinzipiell alle Ni-Komplexe geeignet, welche unter den Reaktionsbedingungen mit dem Phosphin unter Bildung des Komplexkatalysator-Systems reagieren. Als Beispiele geeigneter Ni-Komplexe seien Tetracarbonyl-nickel, Bis(cycloocta-1,5-dien)nickel, (Cyclododeca-1,5,9-trien)nickel, Dimethyl-dipyridyl-nickel und Dimethyl-bis(triphenylphosphino)nickel genannt.

Die für die zweitgenannte Variante erforderlichen Ni(II)-Verbindungen können anorganischer, organischer oder gemischter Natur sein. Als Beispiele seien Nickel(II)-halogenide, Nickel(II)-sulfat, Nickel(II)-acetylacetonat, 1,3-Bis(diphenylphosphino)-propan-nickel(II)-chlorid, Hexamin-nickel(II)-chlorid und Nikkel(II)-bromid Diethylenglykoldimethylether-Komplexe genannt. Als geeignete Reduktionsmittel sind beispielsweise elementares Zink, Trialkylbor-Verbindungen, Trialkylaluminium-Verbindungen, Diisobutylaluminiumhydrid und Phosphine genannt.

Das Komplexkatalysator-System kann in einem separaten Schritt vor der eigentlichen Alkenylierung des Phosphonsäure-Derivats als auch in-situ durch Zusammenfügen der genannten Komponenten hergestellt werden. Als Lösungsmittel kann im Allgemeinen das Phosphonsäure-Derivat, sofern dies unter den Reaktionsbedingungen flüssig ist, eingesetzt werden. Es ist aber auch möglich und gegebenenfalls vorteilhaft, das Komplexkatalysator-System in Gegenwart eines weiteren, inerten Lösungsmittels herzustellen. Vorzugsweise setzt man dann die selben Lösungsmittel ein, welche auch als Lösungsmittel für die Alkenylierungsreaktion eingesetzt werden können und weiter unten beschrieben sind.

Beim erfindungsgemäßen Verfahren setzt man im Allgemeinen ein Molverhältnis zwischen dem Phosphin und dem Nickel des Komplexkatalysator-Systems von 0,5 bis 6, bevorzugt von 1 bis 4 und besonders bevorzugt von 1,5 bis 2,5 ein.

Das Molverhältnis zwischen dem Nickel des Komplexkatalysator-Systems und dem Phosphor des Phosphonsäure-Derivats und den daraus entstandenen Produkten beträgt beim erfindungsgemäßen Verfahren im Allgemeinen 0,01 bis 10 %, bevorzugt 0,05 bis 5% und besonders bevorzugt 0,5 bis 3 %.

Das erfindungsgemäße Verfahren kann bei einer Temperatur von 0 bis 200°C, bevorzugt von 20 bis 150°C und besonders bevorzugt von 50 bis 120°C durchgeführt werden. Es erfolgt im Allgemeinen bei einem Druck von 0,01 bis 5 MPa abs, bevorzugt 0,05 bis 2,5 MPa abs, insbesondere bei Atmosphärendruck.

Das erfindungsgemäße Verfahren kann in Abwesenheit eines zusätzlichen Lösungsmittels ("lösungsmittelfrei") oder in Gegenwart eines inerten Lösungsmittels durchgeführt werden. Als inerte Lösungsmittel sind Lösungsmittel zu verstehen, welche unter den eingestellten Reaktionsbedingungen chemisch nicht mit den eingesetzen Verbindungen reagieren. Geeignete inerte Lösungsmittel sind beispielsweise Tetrahydrofuran, 1,4-Dioxan, N-Methyl-pyrrolidon, N-Methyl-piperidon, Dimethylsulfoxid, Toluol, Xylol, Glykolether (wie z.B. 1,2-Dimethoxyethan (Ethylenglykoldimethylether), Bis(2-methoxyethyl)-ether (Diethylenglyköldimethylether), Triethylenglykoldimethylether oder Tetraethylenglykoldimethylether), Dimethylformamid, Dimethylformanilid und deren Gemische. Der Zusatz eines inerten Lösungsmittels kann beispielsweise beim Einsatz höhermolekularer, zähflüssiger oder unter Reaktionsbedingungen fester Phosphonsäure-Derivate von Vorteil sein.

Es ist gegebenenfalls von Vorteil, das erfindungsgemäße Verfahren in Gegenwart eines sogenannten Radikalinhibitors als Additiv durchzuführen. Als Radikalinhibitoren prinzipiell geeignet sind die allgemein technisch üblichen Inhibitoren, wie beispielsweise N,N'-Bis(1-methylpropyl)-1,4-phenylendiamin, 2,6-Di-tert.-butyl-4-methyl-phenol oder 1,2-Dihydroxybenzol (Brenzcatechin). Wird ein Radikalinhibitor eingesetzt, so wird in der Regel ein Molverhältnis zwischen dem Radikalinhibitor und dem Phosphor des Phosphonsäure-Derivats und den daraus entstandenen Produkten von 0,01 bis 10 %, bevorzugt 0,05 bis 5% und besonders bevorzugt 0,5 bis 3 % eingestellt.

Die beim erfindungsgemäßen Verfahren einzusetzenden Phosphonsäure-Derivate sind allgemein bekannt und besitzen zum Beispiel die Formel (II)

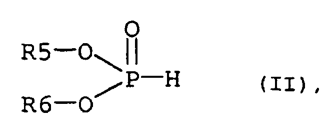

Phosphonsäure-Derivate der Formel (II) werden im Allgemeinen durch Umsetzung von Phosphortrichlorid mit den entsprechenden Alkoholen und/oder den entsprechenden Phenolen hergestellt. Weitere Einzelheiten sind beispielsweise Ullmann's Encyclopedia of Industrial Chemistry, 6^{th} edition, 1999 Electronic Release, Chapter "Phosphorous Compounds, Organic - Phosphites and Hydrogenphosphonates" zu entnehmen.

Bevorzugt setzt man beim erfindungsgemäßen Verfahren ein Phosphonsäure-Derivat (II) ein, bei dem die Reste R⁵ und R⁶ unabhängig voneinander für
- einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO- oder -NR-, ersetzt sein können und bei dem ein oder mehrere der Wasserstoffatome durch Substituenten, wie beispielsweise Arylgruppen ersetzt sein können;
- einen unsubstituierten oder substituierten aromatischen Rest mit einem Ring oder zwei oder drei kondensierten Ringen, bei dem eines oder mehrere Ringatome durch Heteroatome, wie beispielsweise Stickstoff, substituiert sein können und bei dem ein oder mehrere der Wasserstoffatome durch Substituenten, wie beispielsweise Alkyl- oder Arylgruppen ersetzt sein können;
oder bei dem die Reste R⁵ zusammen mit R⁶ für
- einen unverzweigten oder verzweigten, acyclischen oder cyclischen, unsubstituierten oder substituierten C₄- bis C₂₀-Alkylenrest mit 4 bis 10 Atomen in der Alkylenkette, bei dem CH₂-Gruppen auch durch Heterogruppen, wie beispielsweise-CO-, -O- oder -NR- ersetzt sein können und bei dem ein oder mehrere der Wasserstoffatome durch Substituenten, wie beispielsweise Arylgruppen ersetzt sein können;
stehen.

Als Beispiele der bevorzugten Reste R⁵ und R⁶ seien
- C₁- bis C₁₂-Alkyl, besonders bevorzugt Methyl, Ethyl, 1-Propyl, 2-Propyl, 1-Butyl, 2-Butyl, 2-Methyl-1-propyl, 2-Methyl-2-propyl, 1-Pentyl, 1-Hexyl, 1-Octyl, 2-Ethyl-1-hexyl, 1-Decyl und 1-Dodecyl;
- C₆- bis C₁₀-Aryl, besonders bevorzugt Phenyl;
- C₇- bis C₁₀-Aralkyl, besonders bevorzugt Phenylmethyl; und
- C₇- bis C₁₀-Alkaryl, besonders bevorzugt 2-Methylphenyl, 3-Methylphenyl und 4-Methylphenyl;
genannt.

Ganz besonders bevorzugt setzt man beim erfindungsgemäßen Verfahren als Phosphonsäure-Derivate den Dimethylester, den Diethylester, den Dipropylester, den Dibutylester, den Di-(2-ethylhexyl)-ester oder den Diphenylester der Phosphonsäure ein.

Die beim erfindungsgemäßen Verfahren einzusetzenden Alkine besitzen die Formel (III)

R⁷-C≡C-R⁸ (III),

in der R⁷ und R⁸ jeweils unabhängig voneinander Wasserstoff oder ein Kohlenstoff enthaltender organischer Rest bedeutet. Gegebenenfalls können R⁷ und R⁸ auch miteinander verbunden sein. Zur Definition des Begriffs "Kohlenstoff enthaltender organischer Rest" sei auf die obige Ausführung bei der Definition der Reste R¹ bis R⁴ der Formel (I) verwiesen, wobei der Rest im vorliegenden Fall ein- oder zweiwertig ist.

Bevorzugt setzt man beim erfindungsgemäßen Verfahren ein Alkin (III) ein, bei dem die Reste R⁷ und R⁸ unabhängig voneinander für
- Wasserstoff;
- einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO- oder -NR-, ersetzt sein können und bei dem ein oder mehrere der Wasserstoffatome durch Substituenten, wie beispielsweise Arylgruppen ersetzt sein können;
- einen unsubstituierten oder substituierten aromatischen Rest mit einem Ring oder zwei oder drei kondensierten Ringen, bei dem eines oder mehrere Ringatome durch Heteroatome, wie beispielsweise Stickstoff, substituiert sein können und bei dem ein oder mehrere der Wasserstoffatome durch Substituenten, wie beispielsweise Alkyl- oder Arylgruppen ersetzt sein können;
stehen.

Als Beispiele der bevorzugten Reste R⁷ und R⁸ seien
- Wasserstoff;
- C₁- bis C₁₀-Alkyl, besonders bevorzugt Methyl, Ethyl, 1-Propyl, 1-Butyl, 1-Pentyl und 1-Hexyl;
- C₆- bis C₁₀-Aryl, besonders bevorzugt Phenyl;
- C₇- bis C₁₀-Aralkyl, besonders bevorzugt Phenylmethyl; und
- C₇- bis C₁₀-Alkaryl, besonders bevorzugt 2-Methylphenyl, 3-Methylphenyl und 4-Methylphenyl;
genannt.

Ganz besonders bevorzugt setzt man beim erfindungsgemäßen Verfahren als Alkine Ethin oder Propin ein.

Ganz besonders bevorzugt ist beim erfindungsgemäßen Verfahren die Herstellung von Ethenylphosphonsäuredimethylester, Ethenylphosphonsäurediethylester, Ethenylphosphonsäuredi-n-propylester und Ethenylphosphonsäuredi-n-butylester.

Das erfindungsgemäße Verfahren kann diskontinuierlich, halbkontinuierlich oder kontinuierlich durchgeführt werden.

In einer allgemeinen Ausführungsform zur diskontinuierlichen Durchführung werden das Phosphin, der Ni-Komplex (beziehungsweise die Ni(II)-Verbindung und das Reduktionsmittel), das Phosphonsäure-Derivat, das Alkin, gegebenenfalls ein Lösungsmittel und gegebenenfalls ein Radikalinhibitor zusammengegegeben, vermischt und auf Reaktionsbedingung gebracht. Nach Beendigung der Reaktion wird das Reaktionsgemisch zur bevorzugt destillativen Aufarbeitung weitergeleitet und das gewünschte Alkenylphosphonsäure-Derivat isoliert.

In einer allgemeinen Ausführungsform zur halbkontinuierlichen Durchführung werden das Phosphin, der Ni-Komplex (beziehungsweise die Ni(II)-Verbindung und das Reduktionsmittel), das Phosphonsäure-Derivat, gegebenenfalls ein Lösungsmittel und gegebenenfalls ein Radikalinhibitor zusammengegegeben, vermischt und auf Reaktionstemperatur gebracht. Das Alkin wird nun bis zum Erreichen der gewünschten Menge kontinuierlich zugeführt. Die Zufuhr kann in gasförmiger oder flüssiger Form erfolgen. Bei der Zugabe in flüssiger Form kann reines, flüssiges Alkin oder auch eine Lösung in einem Lösungsmittel eingesetzt werden. Nach Beendigung der Zufuhr an Alkin kann das Reaktionsgemisch noch eine weitere Zeit unter den Reaktionsbedingungen belassen werden. Nach Beendigung der Reaktion wird das Reaktionsgemisch zur bevorzugt destillativen Aufarbeitung weitergeleitet und das gewünschte Alkenylphosphonsäure-Derivat isoliert.

In einer allgemeinen Ausführungsform zur kontinuierlichen Durchführung werden das Phosphin, der Ni-Komplex (beziehungsweise die Ni(II)-Verbindung und das Reduktionsmittel), gegebenenfalls ein Lösungsmittel und gegebenenfalls ein Radikalinhibitor zusammengegegeben, vermischt und auf Reaktionstemperatur gebracht. Das Phosphonsäure-Derivat und das Alkin werden nun kontinuierlich im gewünschten Verhältnis zudosiert. Im Allgemeinen wird das Phosphonsäure-Derivat in flüssiger Form, gegebenenfalls gelöst in einem Lösungsmittel, zugegeben. Die Zufuhr kann in gasförmiger oder flüssiger Form erfolgen. Bei der Zugabe in flüssiger Form kann reines, flüssiges Alkin oder auch eine Lösung in einem Lösungsmittel eingesetzt werden. Flüssiges Reaktionsgemisch wird kontinuierlich entfernt und das gebildete Alkenylphosphonsäure-Derivat in einer nachgeschalteten Stufe, beispielsweise destillativ oder extraktiv, isoliert. Gegebenenfalls werden auch höhersiedende Nebenprodukte abgetrennt. Das verbleibende Gemisch, welches hauptsächlich nicht-umgesetztes Phosphonsäure-Derivat und gegebenenfalls das eingesetzte Lösungsmittel enthält, kann gegebenenfalls wieder rückgeführt werden.

Das erfindungsgemäße Verfahren ermöglicht die Herstellung von Alkenylphosphonsäure-Derivaten bei einer Reaktionstemperatur von unterhalb 150°C ohne Einsatz eines teueren Edelmetallkatalysators in nur einem Syntheseschritt, ausgehend von einfach zugänglichen Ausgangsverbindungen. Da es sich um eine sehr selektive Additionsreaktion handelt, werden keine Koppelprodukte und nur eine geringe Menge an Nebenprodukten gebildet. Das erfindungsgemäße Verfahren erlaubt bei guter Verfahrensökonomie eine hohe Ausbeute von deutlich über 50 %.

### Beispiele

### Versuchsdurchführung 1 (Ni(0)-Komplex / Atmosphärendruck)

Bei der Versuchsdurchführung 1 wurden unter sauerstoff- und wasserfreien Bedingungen 0,1 mol des Phosphonsäure-diesters, 2 mol-% Bis(cycloocta-1,5-dien)nickel und 4 mol-% des Diphosphin-Liganden (bzw. 8 mol-% des Monophosphin-Liganden) in einem Rundkolben, welcher mit einem Rückflußkühler ausgerüstet war, vorgelegt. Bei einigen Versuchsdurchführungen wurden 2 mol-% 2,6-Di-tert.-butyl-4-methylphenol als Additiv und/oder 80 mL eines inerten Lösungsmittels hinzugefügt. Für die Umsetzung mit flüssigen Alkinen wurden diese in flüssiger Form zugegeben und die flüssige Mischung unter Rühren auf 100°C erhitzt. Für die Umsetzung mit gasförmigen Alkinen wurden diese direkt in die Flüssigkeit eingeleitet (6 NL/h) und die flüssige Mischung unter Rühren auf 100°C erhitzt.

### Versuchsdurchführung 2 (Ni(0)-Komplex / erhöhter Druck)

Bei der Versuchsdurchführung 2 wurden unter sauerstoff- und wasserfreien Bedingungen 0,1 mol des Phosphonsäure-diesters, 2 mol-% Bis(cycloocta-1,5-dien)nickel, 4 mol-% des Diphosphin-Liganden und 2 mol-% 2,6-Di-tert.-butyl-4-methylphenol als Additiv in einen Autoklaven vorgelegt. Anschließend wurde auf 100°C erhitzt und mit Ethin auf 2,0 MPa abs aufgepreßt. Die im Laufe der Reaktion aufgenommene Ethinmenge wurde unter Konstanthaltung des Drucks nachgepreßt.

### Versuchsdurchführung 3 (Nickel(II)-Verbindung / Atmosphärendruck)

Bei der Versuchsdurchführung 3 wurden unter sauerstoff- und wasserfreien Bedingungen 0,1 mol des Phosphonsäure-diesters und je nach eingesetztem Komplexkatalysatorsystem (3a bis 3c, siehe unten) entsprechende Mengen Ni(II)-Verbindung und Diphosphin bzw. Monophosphin in einem Rundkolben, welcher mit einem Rückflußkühler ausgerüstet war, vorgelegt. Bei einigen Versuchsdurchführungen wurden 2 mol-% 2,6-Di-tert.-butyl-4-methylphenol als Additiv und/oder 80 mL eines inerten Lösungsmittels hinzugefügt. Für die Umsetzung mit gasförmigen Alkinen wurden diese direkt in die Flüssigkeit eingeleitet (6 NL/h) und die flüssige Mischung unter Rühren auf 100°C erhitzt.

Folgende Komplexkatalysator-Systeme wurden eingesetzt:
- Versuchsdurchführung 3a:: 2 mol-% Bis(triphenylphosphin)-nikkel(II)-chlorid 4 mol-% Triphenylphosphin
- Versuchsdurchführung 3b:: 2 mol-% 1,3-Bis(diphenylphosphino)-propan-nickel(II)-chlorid 2 mol-% 1,3-Bis(diphenylphosphino)-propan
- Versuchsdurchführung 3c:: 2 mol-% Hexamin-nickel(II)-chlorid 4 mol-% 1,3-Bis(diphenylphosphino)-propan

### Versuchsdurchführung 4 [Ni(acac)₂, dppp, Atmosphärendruck]

Bei der Versuchsdurchführung 4 wurden unter sauerstoff- und wasserfreien Bedingungen 0,65 mol des Phosphonsäure-diesters mit 63 mL Tetraethylenglykoldimethylether und 2 mol-% Nickel(II)-acetylacetonat (Ni(acac)₂) sowie 4 mol-% des Diphosphin-Liganden 1,3-Bis(diphenylphosphino)-propan (dppp) in einem Kolben, welcher mit einem Rückflußkühler ausgerüstet war, vorgelegt. In einer Durchführung wurden dem Ansatz 2 mol-% 2,6-Di-tert.-butyl-4-methylphenol als Additiv hinzugefügt. Für die Umsetzung mit Ethin wurde das Gas direkt in die Flüssigkeit eingeleitet (12 NL/h) und die flüssige Mischung unter Rühren auf 100°C erhitzt.

Die Analysen bei beiden Varianten der Versuchsdurchführung erfolgten gaschromatografisch. Wenn nicht anders vermerkt wurden Absolutbestimmungen durchgeführt und daraus der Umsatz des Phosphonsäure-diesters, die Selektivität zum Alkenylphosphonsäure-diester und die Ausbeute des Alkenylphosphonsäure-diester berechnet.

### Beispiele 1 bis 19

Eine Übersicht der Beispiele 1 bis 19 ist in den Tabellen 1 und 2 gegeben.

Beim Einsatz von Phenylacetylen (R' = Phenyl, Beispiel 9) und 1-Octin (R' = Hexyl, Beispiel 10) wurden entsprechend der folgenden Reaktionsgleichung drei isomere Alkenylphosphonsäure-diester als Reaktionsprodukte gebildet.

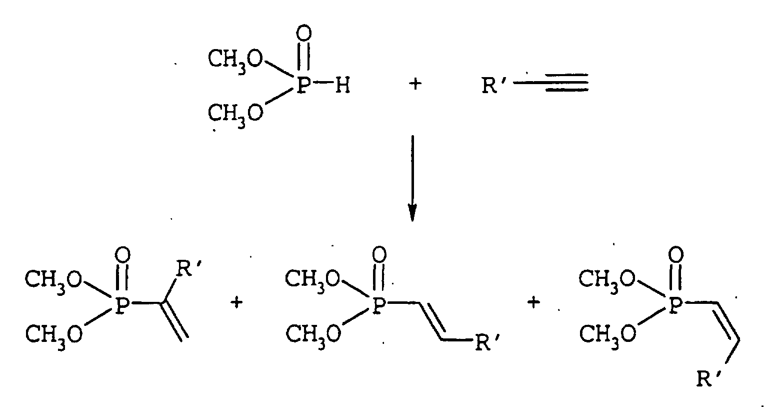

Beim Vergleichsbeispiel 1 mit Triphenylphosphin (tpp) als Ligand des Komplexkatalysator-Systems wurde nach 1 Stunde Reaktionszeit eine Ausbeute an Ethenylphosphonsäure-dimethylester von nur 5% erreicht. Bei den erfindungsgemäßen Beispielen 3 und 5 mit 1,4-Bis(diphenylphosphino)-butan (dppb) und 1,3-Bis(diphenylphosphino)-propan (dppp) als Ligand wurden unter sonst identischen Bedingungen signifikant höhere Ausbeuten von 65 % und 80 % erreicht.

Ein Vergleich der erfindungsgemäßen Beispiele 2 mit 3, 4 mit 5 und 6 mit 7 zeigt den positiven Einfluß eines Radikalinhibitors als Additiv. In Gegenwart von 2,6-Di-tert.-butyl-4-methylphenol als Additiv wurden unter sonst identischen Bedingungen eine um etwa 10 rel.-% höhere Ausbeute erzielt.

Die erfindungsgemäßen Beispiele 4 bis 8 zeigen, daß die Umsetzung sowohl in Gegenwart eines Lösungsmittels als auch in Abwesenheit eines Lösungsmittels mit jeweils hoher Ausbeute durchgeführt werden kann.

Die erfindungsgemäßen Beispiele 7 und 11 zeigen, daß die Umsetzung sowohl unter Atmosphärendruck als auch unter erhöhtem Druck zu einer hohen Ausbeute führt.

Beim Vergleichsbeispiel 14 mit Triphenylphosphin (tpp) als Ligand des Komplexkatalysator-Systems wurde nach 6 Stunden Reaktionszeit eine Ausbeute an Ethenylphosphonsäure-dimethylester von nur 0,2 % erreicht. Beim erfindungsgemäßen Beispiel 15 mit 1,3-Bis(diphenylphosphino)-propan (dppp) als Ligand wurde bereits nach einer Stunde Reaktionszeit eine signifikant höhere Ausbeute von 49 % erreicht.

Die erfindungsgemäßen Beispiele 15 bis 17 zeigen, daß die Umsetzung sowohl in Gegenwart eines Lösungsmittels als auch in Abwesenheit eines Lösungsmittels mit jeweils hoher Ausbeute durchgeführt werden kann.

Die erfindungsgemäßen Beispiele 18 und 19 zeigen, daß durch den Einsatz von Nickel(II)-acetylacetonat als Nickel(II)-Quelle bereits nach 1,5 Stunden Reaktionszeit ein nahezu vollständiger Umsatz von 98 bis 99 % bei gleichzeitig hoher Selektivität von 87 bis 89 % erreicht wird. Es konnte eine hohe Ausbeute von 86 bis 87 % erreicht werden. Beispiel 19 zeigt ferner, daß selbst in Abwesenheit eines Additivs eine hohe Ausbeute von 87 % erzielbar ist. Durch den Einsatz des Lösungsmittels Tetraethylenglykoldimethylether wird aufgrund der größeren Differnz der Siedepunkte zwischen Wertprodukt und Lösungsmittel eine einfachere und bezüglich Produktreinheit verbesserte Trennung erreicht.

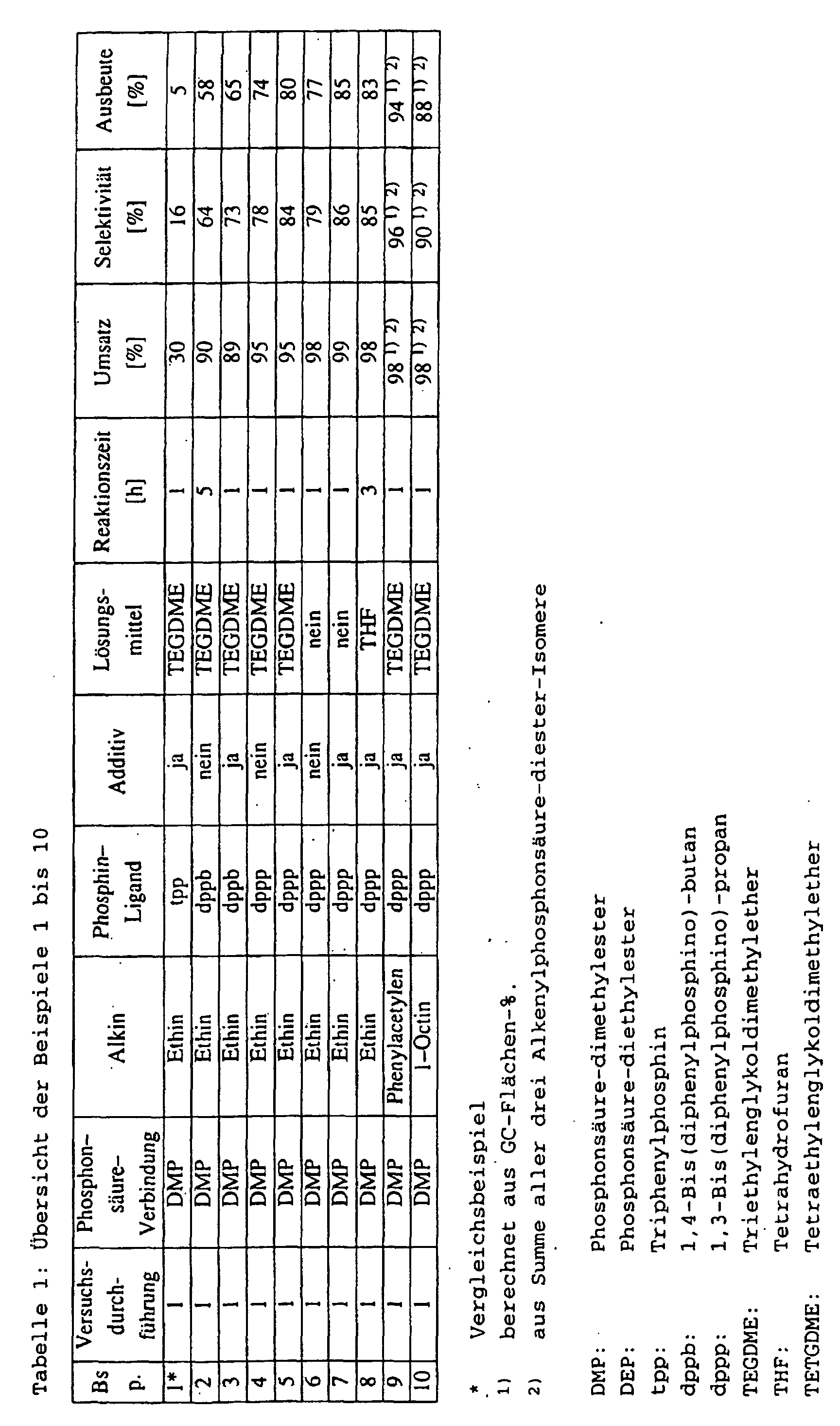

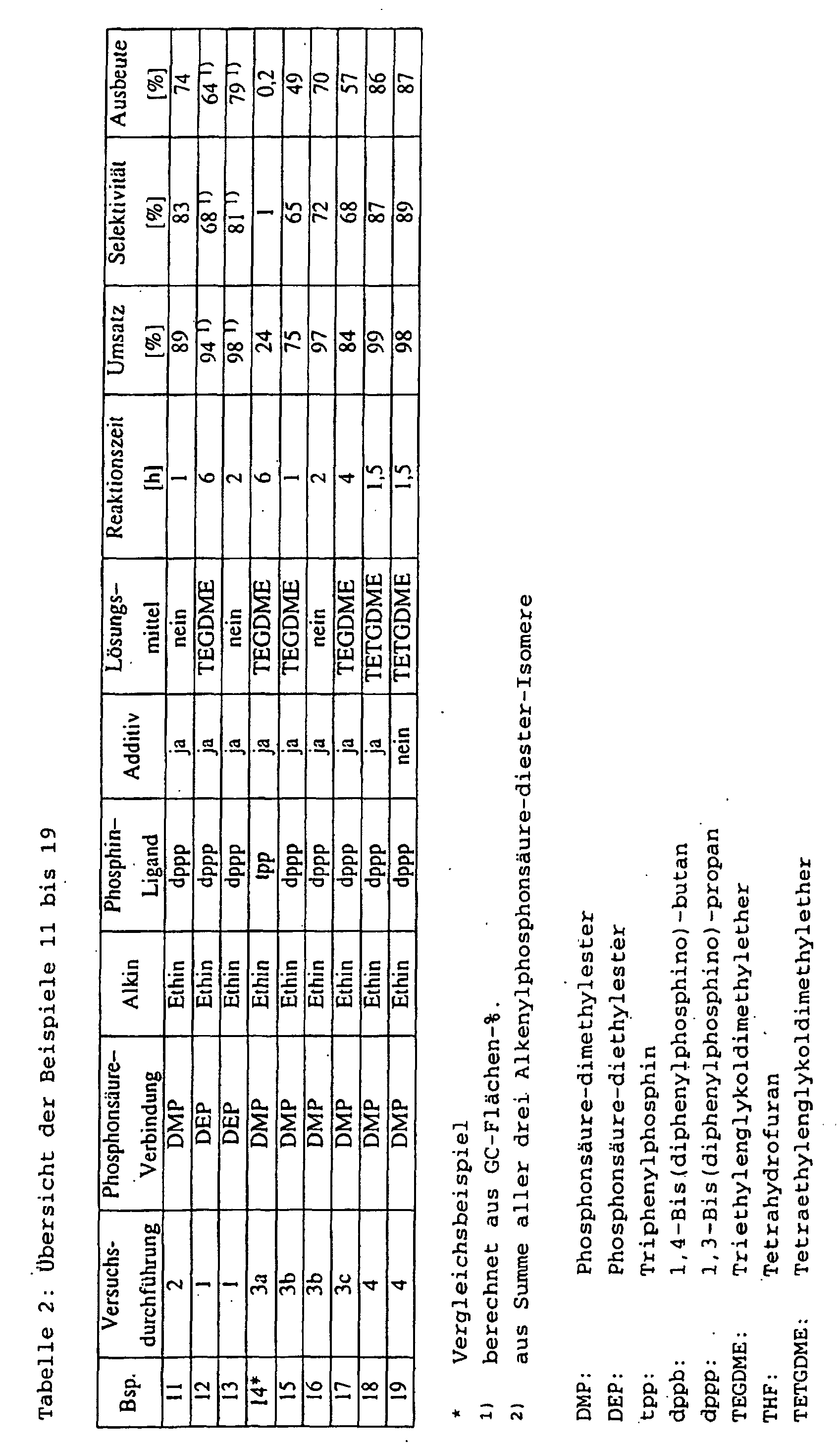

## Patentansprüche

1. Verfahren zur Herstellung von Alkenylphosphonsäure-Derivaten durch Umsetzung von Phosphonsäure-Derivaten mit Alkinen in Gegenwart eines Komplexkatalysator-Systems, **dadurch gekennzeichnet, daß** man ein Komplexkatalysator-Systems verwendet, welches
(a) Nickel und
(b) ein Phosphin mit mindestens zwei dreibindigen Phosphoratomen
enthält.

2. Verfahren nach Anspruch 1, **dadurch gekennzeichnet, daß** man ein Komplexkatalysator-System verwendet, welches ein Phosphin der allgemeinen Formel (I) 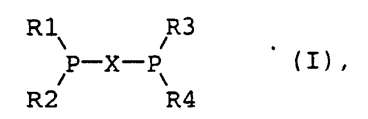 in der R¹, R², R³ und R⁴ jeweils unabhängig voneinander einen Kohlenstoff enthaltenden organischen Rest bedeuten und X für eine Kohlenstoff enthaltende organische Brückengruppe steht, enthält.

3. Verfahren nach Anspruch 2, **dadurch gekennzeichnet, daß** man ein Komplexkatalysator-System verwendet, welches ein Phosphin (I) enthält, bei dem R¹, R², R³ und/oder R⁴ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und Iod gebunden ist, bedeuten; und/oder bei dem R¹, R², R³ und/oder R⁴ unabhängig voneinander einen unsubstituierten oder substituierten aromatischen Rest mit 6 Ringatomen, bei dem ein, zwei oder drei Ringatome durch Stickstoff substituiert sein können, bedeuten; und/oder bei dem R¹ zusammen mit R² und/oder R³ zusammen mit R⁴ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

4. Verfahren nach den Ansprüchen 2 bis 3, **dadurch gekennzeichnet, daß** man ein Komplexkatalysator-System verwendet, welches ein Phosphin (I) enthält, bei dem X für eine unsubstituierte oder substituierte, aliphatische, aromatische oder araliphatische Gruppe mit 1 bis 8 Atomen in der Kette und insgesamt nicht mehr als 20 Kohlenstoffatomen, steht.

5. Verfahren nach den Ansprüchen 2 bis 4, **dadurch gekennzeichnet, daß** man ein Komplexkatalysator-System verwendet, welches ein Phosphin (I) enthält, bei dem R¹ bis R⁴ jeweils eine 2-Methyl-2-propyl- oder jeweils eine Phenyl-Gruppe bedeuten und X für eine 1,2-Ethylen-, 1,3-Propylen-, 1,4-Butylen- oder o-Xylen-Gruppe steht.

6. Verfahren nach den Ansprüchen 1 bis 5, **dadurch gekennzeichnet, daß** man das Komplexkatalysator-System durch Zusammenfügen eines Ni-Komplexes und dem Phosphin oder durch Zusammenfügen einer Ni(II)-Verbindung, eines Reduktionsmittels und dem Phosphin herstellt.

7. Verfahren nach den Ansprüchen 1 bis 6, **dadurch gekennzeichnet, daß** man ein Molverhältnis zwischen dem Nickel des Komplexkatalysator-Systems und dem Phosphor des Phosphonsäure-Derivats und den daraus entstandenen Produkten von 0,01 bis 10% einstellt.

8. Verfahren nach den Ansprüchen 1 bis 7, **dadurch gekennzeichnet; daß** man die Umsetzung bei einer Temperatur von 20 bis 150°C und einem Druck von 0,05 bis 2,5 MPa abs durchführt.

9. Verfahren nach den Ansprüchen 1 bis 8, **dadurch gekennzeichnet, daß** man als Phosphonsäure-Derivat den Dimethylester, den Diethylester, den Dipropylester, den Dibutylester, den Di-(2-ethylhexyl)-ester oder den Diphenylester der Phosphonsäure einsetzt.

10. Verfahren nach den Ansprüchen 1 bis 9, **dadurch gekennzeichnet, daß** man als Alkine Ethin oder Propin einsetzt.

## Claims

1. A process for preparing alkenylphosphonic acid derivatives by reacting phosphonic acid derivatives with alkynes in the presence of a metal complex catalyst system comprising
(a) nickel and
(b) a phosphine having at least two trivalent phosphorus atoms.

2. A process as claimed in claim 1, wherein the metal complex catalyst system comprises a phosphine of the formula (I) 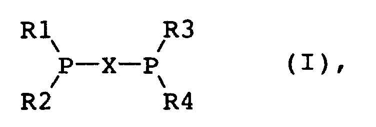 where R¹, R², R³ and R⁴ are each, independently of one another, a carbon-containing organic radical and X is a carbon-containing organic bridging group.

3. A process as claimed in claim 2, wherein the metal complex catalyst system comprises a phosphine (I) in which R¹, R², R³ and/or R⁴ are each, independently of one another, an unsubstituted or substituted C₃-C₁₂-alkyl radical in which not more than one atom from the group consisting of hydrogen, fluorine, chlorine, bromine and iodine is bound to the α-carbon atom; and/or in which R¹, R², R³ and/or R⁴ are each, independently of one another, an unsubstituted or substituted aromatic radical having 6 ring atoms in which one, two or three ring atoms may be replaced by nitrogen; and/or in which R¹ together with R² and/or R³ together with R⁴ form an unsubstitiuted or substituted, aliphatic, aromatic or araliphatic group having from 4 to 7 atoms in the chain and a total of not more than 30 carbon atoms.

4. A process as claimed in claim 2 or 3, wherein the metal complex catalyst system used comprises a phosphine (I) in which X is an unsubstituted or substituted, aliphatic, aromatic or araliphatic group having from 1 to 8 atoms in the chain and a total of not more than 20 carbon atoms.

5. A process as claimed in any of claims 2 to 4, wherein the metal complex catalyst system used comprises a phosphine (I) in which R¹ to R⁴ are each a 2-methyl-2-propyl group or each a phenyl group and X is a 1,2-ethylene, 1,3-propylene, 1,4-butylene or o-xylene group.

6. A process as claimed in any of claims 1 to 5, wherein the metal complex catalyst system is prepared by combining an Ni complex and the phosphine or by combining an Ni(II) compound, a reducing agent and the phosphine.

7. A process as claimed in any of claims 1 to 6, wherein the molar ratio of the nickel of the metal complex catalyst system to the phosphorus of the phosphonic acid derivative and the products formed therefrom is from 0.01 to 10%.

8. A process as claimed in any of claims 1 to 7, wherein the reaction is carried out at from 20 to 150°C and a pressure of from 0.05 to 2.5 MPa abs.

9. A process as claimed in any of claims 1 to 8, wherein the phosphonic acid derivative used is the dimethyl ester, the diethyl ester, the dipropyl ester, the dibutyl ester, the di(2-ethylhexyl) ester or the diphenyl ester of phosphonic acid.

10. A process as claimed in any of claims 1 to 9, wherein the alkyne used is ethyne or propyne.

## Revendications

1. Procédé pour la préparation de dérivés d'acides alcénylphosphoniques au moyen de la réaction de dérivés d'acides phosphoniques avec des alcynes en présence d'un système de catalyseur complexé, **caractérisé en ce que** l'on utilise un système de catalyseur complexé qui contient
(a) du nickel et
(b) une phosphine contenant au moins deux atomes de phosphore trivalents.

2. Procédé selon la revendication 1, **caractérisé en ce que** l'on utilise un système de catalyseur complexé, lequel contient une phosphine de formule générale (I) 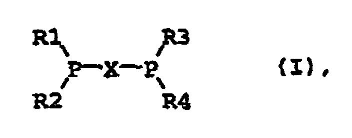 dans laquelle R¹, R², R³ et R⁴ représentent, à chaque fois indépendamment les uns des autres, un groupe organique carboné et X représente un groupe pontant organique carboné.

3. Procédé selon la revendication 2, **caractérisé en ce que** l'on utilise un système de catalyseur complexé, qui contient une phosphine (I), dans laquelle R¹, R², R³ et/ou R⁴ représentent, indépendamment les uns des autres, un groupe alkyle en C₃ à C₁₂ non substitué ou substitué, dans lequel au plus un atome du groupe formé par un atome d'hydrogène, de fluor, de chlore, de brome et d'iode est lié à l'atome de carbone α ; et/ou dans laquelle R¹, R², R³ et/ou R⁴ représentent, indépendamment les uns des autres, un groupe aromatique non substitué ou substitué contenant 6 atomes dans le cycle, dans lequel un, deux ou trois atomes du cycle peuvent être substitués par un atome d'azote ; et/ou dans laquelle R¹ conjointement avec R² et/ou R³ conjointement avec R⁴ représentent un groupe aliphatique, aromatique ou araliphatique non substitué ou substitué contenant 4 à 7 atomes dans la chaîne et au total pas plus de 30 atomes de carbone.

4. Procédé selon les revendications 2 à 3, **caractérisé en ce que** l'on utilise un système de catalyseur complexé, qui contient une phosphine (I), dans laquelle X représente un groupe aliphatique, aromatique ou araliphatique non substitué ou substitué contenant 1 à 8 atomes dans la chaîne et au total pas plus de 20 atomes de carbone.

5. Procédé selon les revendications 2 à 4, **caractérisé en ce que** l'on utilise un système de catalyseur complexé, qui contient une phosphine (I), dans laquelle R¹ à R⁴ représentent chacun un groupe 2-méthyl-2-propyle ou chacun un groupe phényle et X représente un groupe 1,2-éthylène, 1,3-propylène, 1,4-butylène ou o-xylène.

6. Procédé selon les revendications 1 à 5, **caractérisé en ce que** l'on produit le système de catalyseur complexé en couplant un complexe de Ni et la phosphine ou en couplant un composé de Ni(II), un agent réducteur et la phosphine.

7. Procédé selon les revendications 1 à 6, **caractérisé en ce que** l'on ajuste un rapport molaire entre le nickel du système de catalyseur complexé et le phosphore du dérivé d'acide phosphonique et des produits résultants à une valeur allant de 0,01% à 10%.

8. Procédé selon les revendications 1 à 7, **caractérisé en ce que** l'on réalise la réaction à une température allant de 20°C à 150°C et sous une pression allant de 0,05 MPa à 2,5 MPa absolus.

9. Procédé selon les revendications 1 à 8, **caractérisé en ce que** l'on met en oeuvre, en tant que dérivé d'acide phosphonique, l'ester diméthylique, l'ester diéthylique, l'ester dipropylique, l'ester dibutylique, l'ester di-(2-éthylhexylique) ou l'ester diphénylique de l'acide phosphonique.

10. Procédé selon les revendications 1 à 9, **caractérisé en ce que** l'on met en oeuvre, en tant qu'alcynes, l'éthyne ou le propyne.
